# EUROPEAN PATENT APPLICATION

(11) **EP 4 593 178 A1**
(43) Date of publication of application: **30.07.2025**
(21) Application number: 22959859.4
(22) Date of filing: 27.09.2022
(51) Int. Cl.: H01M 50/30, H01M 50/35, H01M 50/20, H01M 50/244

(54) **ENERGY STORAGE DEVICE**

(71) Applicant: Contemporary Amperex Technology Co., Limited, Ningde, Fujian 352100 (CN)
(72) Inventor: CHEN, Xiaobo, Ningde, Fujian 352100 (CN); JIN, Qiu, Ningde, Fujian 352100 (CN); WANG, Xuehui, Ningde, Fujian 352100 (CN)
(74) Representative: Ziebig Hengelhaupt Intellectual Property Attorneys Patentanwaltskanzlei PartGmbB
(86) International application number: PCT/CN2022/121865
(87) International publication number: WO 2024/065210

(57) **Abstract**

An energy storage device is provided in the embodiments of the present disclosure, wherein the energy storage device includes at least one energy storage module, and each energy storage module includes a box body, a plurality of batteries, and a smoke exhaust assembly. The plurality of batteries are arranged in the box body, wherein each battery includes a battery box and a plurality of battery cells, wherein the battery cells include a pressure relief mechanism and electrode terminals; the pressure relief mechanism is arranged on a first wall of the battery cells; the electrode terminals are arranged on a second wall of the battery cells; the second wall is different from the first wall; and the battery box is provided with a first exhaust port. The smoke exhaust assembly is communicated with the first exhaust port of each battery, and is configured to discharge smoke discharged by the plurality of batteries to the outside of the box body. The energy storage device of the present disclosure has a higher level of safety.

## Description

### Technical Field

The present disclosure relates to the technical field of energy storage devices, and specifically to an energy storage device.

### Background Art

With the vigorous development of renewable energy, energy storage devices are required to be used to alleviate the pressure of power grid in peak regulation and frequency regulation. Among multiple energy storage methods, the development of electrochemical energy storage is particularly rapid. However, the battery contains a large amount of organic electrolyte, so that battery energy storage devices have security risks in use, for example, when an excessive temperature difference or excessive charge/discharge occurs in the batteries, the battery undergoes thermal runaway therein. The temperature inside the battery rises at this time, so that the organic electrolyte is volatilized by heat and produces a large amount of flammable smoke, which will lead to battery explosion and secondary hazards in serious cases, thus affecting the safety performance of the energy storage device.

### Summary

As for the above problem, a purpose of the present disclosure is to provide an energy storage device with higher safety.

The present disclosure is realized by following technical solutions.

The present disclosure provides an energy storage device including at least one energy storage module, and each energy storage module includes a box body, a plurality of batteries, and a smoke exhaust assembly. The plurality of batteries are arranged in the box body, wherein each battery includes a battery box and a plurality of battery cells, wherein the battery cells include a pressure relief mechanism and electrode terminals; the pressure relief mechanism is arranged on a first wall of the battery cells; the electrode terminals are arranged on a second wall of the battery cells; the second wall is different from the first wall; and the battery box is provided with a first exhaust port. The smoke exhaust assembly is communicated with the first exhaust port of each battery, and is configured to discharge smoke discharged by the plurality of batteries to outside of the box body. The battery box includes an electrical chamber, a collection chamber, and a first isolation component, wherein the plurality of battery cells are accommodated in the electrical chamber, and the first isolation component is configured to isolate the electrical chamber from the collection chamber; and the first isolation component is provided with a through hole, wherein the through hole is arranged opposite to the pressure relief mechanism, the smoke discharged by the battery cells can pass through the through hole and enter the collection chamber when the pressure relief mechanism is actuated, and the first exhaust port is communicated with the collection chamber.

In the above solution, the electrode terminals and the pressure relief mechanism are separately arranged on two different walls of the battery cell, which reduces a probability that the smoke discharged by the battery cells passes through the electrode terminals and other electrical components when the pressure relief mechanism is actuated, so as to reduce a risk of electrical hazards, and improve a safety of the energy storage device.

According to some embodiments of the present disclosure, the first wall is attached to the first isolation component.

In the above solution, the first wall is attached to the first isolation component, so as to reduce the space occupied by structure members in the battery cell, and at the same time facilitate the pressure relief mechanism to discharge the smoke.

According to some embodiments of the present disclosure, the first wall is arranged opposite to the second wall.

In the above solution, the first wall and the second wall are arranged oppositely so that a distance between the first wall and the second wall is larger, which further reduces the probability that the smoke passes through the electrode terminals when the battery cells discharge the smoke outwardly via the pressure relief mechanism, so as to reduce the risk of the electrical hazards, and improve the safety of the energy storage device.

According to some embodiments of the present disclosure, the smoke exhaust assembly includes a main pipe and a plurality of branch pipes, wherein the plurality of branch pipes and the plurality of batteries are in one-to-one correspondence; one end of each branch pipe is communicated with the first exhaust port of the corresponding battery; the other end of each branch pipe is communicated with the main pipe; and one end of the main pipe is communicated with outside of the box body.

In the above solution, the branch pipes are provided to isolate smoke discharge paths of the different batteries, which reduces the risk that the smoke produced by the battery with thermal runaway passes through another batteries and causes adverse effects, and improves the safety of the energy storage device.

According to some embodiments of the present disclosure, the one end of the main pipe communicated with the outside of the box body is provided with a smoke exhaust fan and/or a fire damper.

In the above solution, the smoke exhaust fan is provided to improve efficiency of discharging smoke, so that the branch pipes and the main pipe have a negative pressure therein, which prevents the smoke from returning to the battery, and avoids a negative effect on normal batteries caused by the smoke. The fire damper is provided to effectively reduce the probability of fire and an accident of tempering, which improves the safety of the energy storage device. When the smoke exhaust fan and the fire damper are provided, it can not only avoid the negative effect on the normal batteries caused by the smoke, but can also reduce the probability of fire and tempering, which effectively improves the safety of the energy storage device.

According to some embodiments of the present disclosure, the smoke exhaust assembly includes a second isolation component and a plurality of branch pipes, wherein the second isolation component is configured to separate an internal space of the box body into a battery chamber and a gas-collecting chamber; the plurality of batteries are arranged in the battery chamber; and the plurality of branch pipes and the plurality of batteries are in one-to-one correspondence, wherein one end of each branch pipe is communicated with the first exhaust port of the battery and the other end is communicated with the gas-collecting chamber, and a second exhaust port communicated with the gas-collecting chamber is arranged on the box body.

In the above solution, the gas-collecting chamber is isolated by the second isolation component in the box body to collect the smoke, which can fully utilize the internal space of the box body, and improve the space utilization rate.

According to some embodiments of the present disclosure, the second exhaust port is provided with the smoke exhaust fan and/or the fire damper.

In the above solution, the smoke exhaust fan is provided to improve the efficiency of discharging smoke, so that the branch pipes and the gas-collecting chamber have the negative pressure therein, which can prevent the smoke from returning to the battery, and avoid the negative effect on normal batteries caused by the smoke; and the fire damper is provided to effectively reduce the probability of fire and the accident of tempering. When the smoke exhaust fan and the fire damper are provided, it can not only avoid the negative effect on the normal batteries caused by the smoke, but can also reduce the probability of fire and tempering, which effectively improves the safety of the energy storage device.

According to some embodiments of the present disclosure, the smoke exhaust assembly further includes a plurality of check valves, wherein each branch pipe is provided with one check valve correspondingly, and the check valve is configured to uniaxially discharge the smoke discharged by the first exhaust port to the outside of the box body via the smoke exhaust assembly.

In the above solution, the check valves are arranged in the branch pipes to improve a rate of discharging smoke in the branch pipes, and at the same time the check valves effectively prevent the smoke from returning, which affects other normal batteries, thereby improving the safety of the energy storage device.

According to some embodiments of the present disclosure, each energy storage module further includes a sensor and a fire extinguishing mechanism, wherein the sensor and the fire extinguishing mechanism are arranged in the box body; the sensor is configured to detect a gas state parameter in the box body; and the fire extinguishing mechanism is configured to extinguish fire within the box body when the sensor detects an abnormal gas state parameter.

In the above solution, the sensor and the fire extinguishing mechanism are provided, so that it is possible to detect an abnormal state via the sensor and then control the fire extinguishing mechanism in time for fire protection when the battery in the energy storage module undergoes the thermal runaway, so that the energy storage module has a function of automatic fire protection, which improves the safety of the energy storage module.

According to some embodiments of the present disclosure, wherein a plurality of sensors are arranged in the box body of each energy storage module, and the fire extinguishing mechanism is configured to extinguish the fire within the box body when at least two sensors detect the abnormal gas state parameter.

In the above solution, the plurality of sensors are arranged in the energy storage module, which improves an accuracy of the sensors for monitoring the abnormal state, such as thermal runaway, etc., so as to avoid triggering the fire extinguishing mechanism by mistake, and improve a stability of the energy storage module.

According to some embodiments of the present disclosure, each energy storage module further includes a fire extinguishing controller, wherein the fire extinguishing controller is electrically connected to the sensor and the fire extinguishing mechanism, and the sensor sends an electrical signal to the fire extinguishing controller according to a detection result of the gas state parameter; and the fire extinguishing controller controls actions of the fire extinguishing mechanism according to the electrical signal.

In the above solution, the fire extinguishing controller is provided to control the fire extinguishing mechanism pertinently, which improves an actuating accuracy of the fire extinguishing mechanism, and improves the stability of the energy storage module.

According to some embodiments of the present disclosure, the energy storage device includes a smoke exhaust main pipe and a plurality of energy storage modules, wherein a plurality of energy storage modules are stacked along a direction of gravity, and the smoke exhaust assembly of each energy storage module is communicated with the smoke exhaust main pipe, wherein the smoke exhaust main pipe is arranged outside of the box body of the plurality of energy storage modules.

In the above solution, the plurality of energy storage modules are provided to expand a capacity of the energy storage device, and at the same time the smoke discharged by the plurality of energy storage modules is discharged via the smoke exhaust main pipe, so as to ensure the safety and universality of the energy storage device.

According to some embodiments of the present disclosure, the energy storage device further includes a fire extinguishing controller, and the plurality of energy storage modules share the one fire extinguishing controller, wherein the fire extinguishing controller is electrically connected to the sensor and the fire extinguishing mechanism, and the sensor sends an electrical signal to the fire extinguishing controller according to a detection result of the gas state parameter; and the fire extinguishing controller controls actions of the fire extinguishing mechanism according to the electrical signal.

In the above solution, the fire extinguishing controller simultaneously controls the sensors and the fire extinguishing mechanism of the plurality of energy storage modules, so as to carry out the fire protection only for corresponding energy storage modules in serious abnormal states according to specific situations of the abnormal state, such as thermal runaway, thus avoiding unnecessary waste and loss due to the fire protection for normal (without the abnormal states) energy storage modules and improving the fire protection efficiency of the automatic fire protection actions.

Additional aspects and advantages of the present disclosure will be partly given in the following description, and parts of them will become apparent in the following description or will be realized by the practice of the present disclosure. The foregoing description is only an overview of the technical solutions of the present disclosure, in order to more clearly understand the technical means of the present disclosure so as to be implemented according to the contents of the specification; and in order to make the above and other purposes, features, and advantages of the present disclosure more obvious and understandable, the specific embodiments of the present disclosure are described below.

### Brief Description of Drawings

In order to more clearly illustrate the technical solutions of the embodiments of the present disclosure, the drawings to be used in the embodiments will be briefly introduced below. It should be understood that the following drawings only show certain embodiments of the present disclosure, and therefore should not be regarded as a limitation of the scope. For persons of ordinary skill in the art, other relevant drawings can be obtained from these drawings without inventive efforts.
FIG. 1 shows a schematic structure diagram of an energy storage device provided by an embodiment of the present disclosure;
FIG. 2 shows a schematic structure diagram of a side section of an energy storage device shown in FIG. 1;
FIG. 3 shows a schematic structure diagram of an energy storage device provided by another embodiment of the present disclosure;
FIG. 4 shows a schematic structure diagram of a side section of an energy storage device provided by another embodiment of the present disclosure;
FIG. 5 shows a schematic structure diagram of an energy storage device provided by another embodiment of the present disclosure; and
FIG. 6 shows a logic control flow diagram of an energy storage device of the present disclosure.

Reference numbers: 1000-energy storage device; 2000-energy storage module; 100-box body; 110-battery chamber; 120-gas-collecting chamber; 200-battery; 210-battery box; 211-electrical chamber; 212-collection chamber; 213-first isolation component; 214-first exhaust port; 220-battery cell; 221-first wall; 222-second wall; 223-pressure relief mechanism 224-electrode terminal; 300-smoke exhaust assembly; 310-main pipe; 320-branch pipe; 330-smoke exhaust fan; 340-fire damper; 350-second isolation component; 360-check valve; 400-supporting leg; 500-sensor; and 600-smoke exhaust main pipe.

### Detailed Description of Embodiments

The specific embodiments of the present disclosure will be described below in more detail in conjunction with drawings and embodiments. The detailed description of the following embodiments and the drawings are used to exemplarily illustrate principles of the present disclosure, and are not to be used to limit the scope of the present disclosure, i.e., the present disclosure is not limited by the embodiments described herein.

Unless otherwise defined, all technical and scientific terms used in the text have the same meaning as commonly understood by those skilled in the art belonging to the present disclosure. The terms used in the text are used only for the purpose of describing specific embodiments, and are not intended to limit the present disclosure. The terms "include" and "comprise," and any variations thereof in the specification of the present disclosure and claims and the foregoing description of drawings, are intended to cover a non-exclusive inclusion.

In the description of the embodiments of the present disclosure, the technical terms "first", "second", etc., are only used to distinguish different objects, and are not to be understood as indicating or implying relative importance or implicitly specifying a quantity, particular order, or primary and secondary relationship of the technical features indicated.

Reference to "embodiment" in the text means that particular feature, structure, or characteristic described in conjunction with the embodiments can be included in at least one embodiment of the present disclosure. The phrase occurring at various positions in the specification does not necessarily all refer to the same embodiment, nor is it a separate or alternative embodiment that is mutually exclusive with other embodiments. It is explicitly and implicitly understood by those skilled in the art that the embodiments described in the text can be combined with other embodiments.

In the description of embodiments of the present disclosure, the term "plurality" refers to more than two (including two). Similarly, unless otherwise specific limited, "the plurality of groups" refers to more than two groups (including two groups), and "the plurality of plates" refers to more than two plates (including two plates).

In the description of embodiments of the present disclosure, orientations or positional relationships indicated by the technical terms "center", "longitudinal", "transverse", "length", "width", "thickness", "up", "down", "front", "back", "left", "right", "vertical", "horizontal", "top", "bottom", "inside", "outside", "clockwise", "counterclockwise", "axial", "radial", "circumferential", etc., are the orientations or positional relationships based on that shown in the drawings, which are used only to facilitate the description of the present disclosure and simplify the description, and are not to indicate or imply that the device or element referred to must have particular orientations, or be constructed and operated in the particular orientations, and therefore cannot be understood as a limitation of the present disclosure.

In the description of the embodiments of the present disclosure, unless otherwise expressly regulated and limited, the technical terms "mount", "connect", "link", and "fix", etc., are to be understood in a broad sense, e.g., it can be a fixed connection, a detachable connection, or an integral connection; it can be a mechanical connection, or an electrical connection; it can be a direct connection, or an indirect connection by an intermediate medium; and it can also be a communication inside two elements, or an interaction between the two elements. For those of ordinary skill in the art, the specific meaning of the above terms in the embodiments of the present disclosure can be understood on specific situations.

As used in the present disclosure, the "plurality" means more than two (including two). Similarly, "the plurality of groups" refers to more than two groups (including two groups), and "the plurality of plates" refers to more than two plates (including two plates).

The battery referred to in the present disclosure refers to a single physical module including one or more battery cells to provide a higher voltage and capacity. For example, the battery referred to in the present disclosure can include a battery module or battery pack, etc.

The battery cell includes electrode assembly and electrolyte, wherein the electrode assembly is consisted of a positive electrode plate, negative electrode plate, and isolation separator. The battery cell works primarily on metal ions moving between the positive electrode plate and negative electrode plate. The positive electrode plate includes a positive electrode collector and a positive electrode active substance layer, wherein the positive electrode active substance layer is coated on a surface of the positive electrode collector, and the positive electrode collector not coated with the positive electrode active substance layer is configured as a positive electrode lug. Taking the lithium-ion battery as an example, materials of the positive electrode collector can be aluminum, and the positive electrode active substance can be lithium cobaltate, lithium iron phosphate, ternary lithium, or lithium manganate, etc. The negative electrode plate includes a negative electrode collector and a negative electrode active substance layer, wherein the negative electrode active substance layer is coated on a surface of the negative electrode collector, and the negative electrode collector not coated with the negative electrode active substance layer is configured as a negative electrode lug. The material of the negative electrode collector can be copper, and the negative electrode active substance can be carbon or silicon, etc. In order to ensure that a heavy current is passed without fusing, a plurality of positive electrode lugs are provided and laminated together, and a plurality of negative electrode lugs are provided and laminated together. The material of the isolation separator can be PP (polypropylene) or PE (polyethylene), etc.

It is to consider multiple design factors simultaneously for the development of the battery technology, such as energy density, discharging capacity, charging/discharging rate, and other performance parameters. Additionally, the assembly efficiency of the battery also needs to be considered.

The energy storage device is a power supply device to supply power for large-scale electrical devices. The energy storage device does not need to be moved under majority of application scenarios. Therefore, the energy density of the battery in the energy storage device usually cannot be asked too strictly, but needs to adjust different power densities according to different energy storage scenarios. For energy storage scenarios such as power peak regulation, off-grid photovoltaic energy storage, or peak-valley price difference at the user side, the energy storage battery is generally required to continuously charge or continuously discharge for more than two hours, and therefore it is suitable to use a capacity-type battery with a charging/discharging rate of ≤0.5C. For the energy storage scenarios such as power frequency modulation, or smooth renewable energy fluctuation, the energy storage device is generally required to charge/discharge rapidly in the duration from seconds to minutes, and therefore it is suitable to use a power-type battery of ≥2C.

The inventors note that the energy storage device produces a large amount of heat during use, which also leads to safety concerns of the energy storage device. When temperature homogeneity between multiple batteries is poor or the battery is in excessive charging/discharging, localized smoking or even fire occurs inside the battery due to thermal runaway. The prior energy storage device is not provided with a corresponding directional smoke exhaust system, so that high-temperature flammable smoke of the battery produced by the thermal runaway cannot be discharged directionally. As a result, the high-temperature flammable smoke accumulates inside the battery box, or is discharged into the energy storage device via an explosion-proof valve of the battery box. When the high-temperature flammable smoke accumulates inside the battery box, the battery box will explode due to the limited strength of the box body. When high-temperature flammable smoke is discharged directly into the energy storage device, the high-temperature flammable smoke will impact the surrounding battery box which works normally, so that the original normal battery is destroyed, which will lead to secondary hazards in serious cases.

In order to solve the problem of the directional discharge of high-temperature flammable smoke in the battery box, the prior art generally designs a special smoke exhaust assembly for each battery box inside the energy storage device and provides a corresponding guiding assembly. The high-temperature flammable smoke inside the battery box is discharged directionally to the corresponding smoke exhaust assembly, and then discharged to the outside of the energy storage device via the smoke exhaust assembly. In this way, when one or more battery boxes produce high-temperature flammable smoke due to the thermal runaway, the smoke can be discharged to the outside of the energy storage device via the corresponding smoke exhaust assembly connected to the battery box, so that the smoke will not be accumulated inside the battery box and lead to an explosion of the battery box, or will not be diffused from the battery box into the energy storage device and lead to the secondary hazard, thereby improving the safety performance of the energy storage device.

However, this solution still has defects. The battery cell is provided with a pressure relief mechanism for discharging smoke. The pressure relief mechanism in the prior art is usually arranged on a top wall of the battery cell, and the rest electrical components are similarly arranged on the top wall of the battery cell. Therefore, when the smoke produced inside the battery cell is discharged out of the battery cell via the pressure relief mechanism, the smoke will pass through the electrical components on the top wall of the battery cell, such as electrode terminals, busbars, etc. The composition of the smoke is complex, including but not limited to flammable gas, and electrolyte vapor, so that electrical hazards such as high-voltage breakdown, ignition failure, and a short circuit will exist during the process that the smoke passes through the electrical components.

In view of this, in order to solve the safety problems in the above energy storage device, the inventor, after in-depth research, designed a technical solution. It is to arrange electrode terminals and the pressure relief mechanism separately, which reduces a probability that the smoke passes through the electrode terminals when discharged from the pressure relief mechanism, so as to reduce the risk of triggering the electrical hazards, and thus improving an effect of the safety performance of the energy storage device.

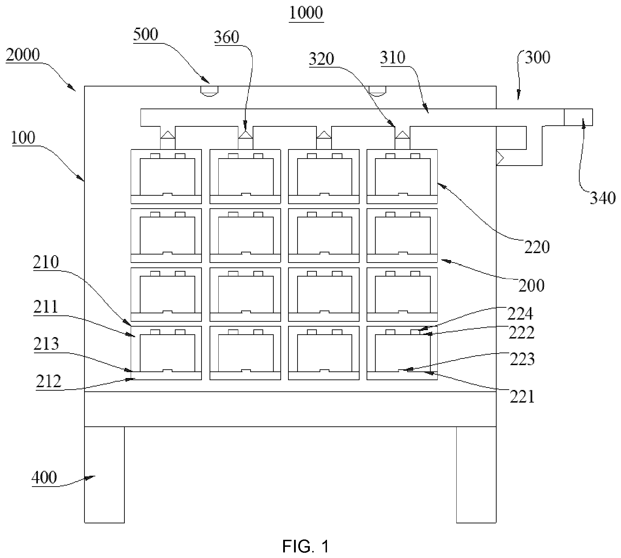

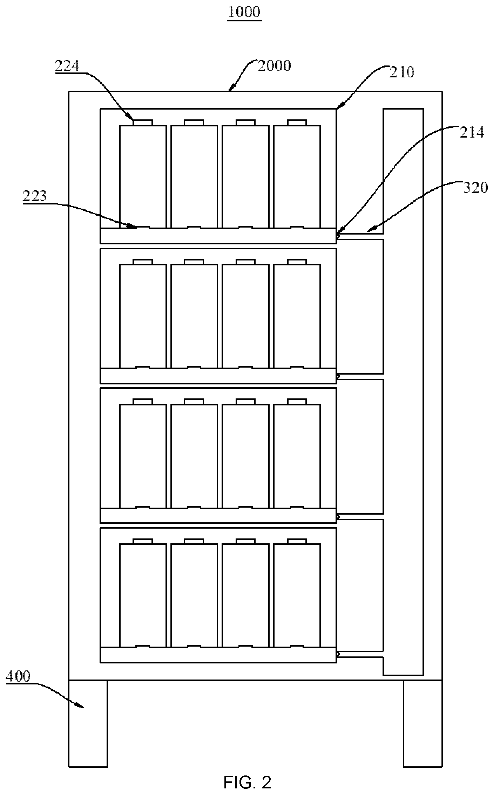

Referring to FIG. 1 and FIG. 2, FIG. 1 shows a schematic structure diagram of the energy storage device provided by an embodiment of the present disclosure, and FIG. 2 shows a schematic structure diagram of a side section of the energy storage device shown in FIG. 1. The embodiments of present disclosure provide an energy storage device 1000, wherein the energy storage device 1000 includes at least one energy storage device 2000, and each energy storage module 2000 includes a box body 100, a plurality of batteries 200, and a smoke exhaust assembly 300. The plurality of batteries 200 are arranged in the box body 100, wherein each battery 200 includes a battery box 210 and a plurality of battery cells 220, wherein the battery cells 220 include a pressure relief mechanism 223 and electrode terminals 224; the pressure relief mechanism 223 is arranged on a first wall 221 of the battery cells 220; and the electrode terminals 224 are arranged on a second wall 222 of the battery cells 220, wherein the second wall 222 is different from the first wall 221, and a first exhaust port 214 is arranged on the battery box 210. The smoke exhaust assembly 300 is communicated with the first exhaust port 214 of each battery 200, and configured to discharge smoke discharged by the plurality of batteries 200 to outside of the box body 100.

The battery box 210 includes an electrical chamber 211, a collection chamber 212, and a first isolation component 213, wherein the plurality of battery cells 220 are accommodated in the electrical chamber 211, and the first isolation component 213 is configured to isolate the electrical chamber 211 from the collection chamber 212; and the first isolation component 213 is provided with a through hole (not shown), wherein the through hole is arranged opposite to the pressure relief mechanism 223. The smoke discharged by the battery cells 220 can pass through the through hole and enter the collection chamber 212 when the pressure relief mechanism 223 is actuated, and the first exhaust port 214 is communicated with the collection chamber 212.

In the embodiment, the energy storage module 2000 can be a power station valve tower, which is configured to provide electrical energy for an electrical device. The valve tower can be of a container structure, and supporting legs 400 are arranged at the bottom of the valve tower, such that the bottom surface of the valve tower is not in contact with the ground directly, so that a working environment of the valve tower is cleaner and tidier, which reduces the interference brought about by the external environment; and at the same time, the bottom surface of the valve tower is in contact with the air, which increases the area of the valve tower for heat exchange with air, so as to improve the cooling performance of the valve tower. The internal space of the valve tower can also be called as a valve hall.

The battery 200 includes the battery box 210 and the battery cell 220, wherein the battery cell 220 is accommodated in the battery box 210. The battery box 210 is configured to provide an accommodating space for the battery cell 220, and the battery box 210 can be of multiple structures. In some embodiments, the battery box 210 can be of a structure with the upper part covering the lower part, or can be of a hollow structure opened at the side.

In the battery 200, the plurality of battery cells 220 can be provided, wherein the plurality of battery cells 220 can be connected in series or in parallel or in hybrid, and the hybrid connection means that the plurality of battery cells 220 are both connected in series and in parallel. The plurality of battery cells 220 can be directly connected in series or in parallel or in hybrid, and then the whole constituted by the plurality of battery cells 220 is accommodated in the battery box 210. Of course, the battery 200 can also be that the plurality of battery cells 220 are firstly connected in series or in parallel or in hybrid to form a battery module, and the plurality of battery modules are then connected in series or in parallel or in hybrid to form a whole, and are accommodated in the battery box 210. The battery 200 can also include other structures, e.g., the battery 200 can also include a busbar component to realize the electrical connection between the plurality of battery cells 220.

The battery cell 220 can be a secondary battery or primary battery, the battery cell 220 can also be a lithium-sulfur battery, sodium-ion battery, or magnesium-ion battery, but is not limited thereto.

The pressure relief mechanism 223 is arranged on the first wall 221 of the battery cell 220 for discharging the smoke in the battery cell 220 out of the battery cell 220, wherein the first wall 221 is one wall of the walls of the battery cell 220. The electrode terminals 224 are arranged on the second wall 222 of the battery cell 220 for electrically connecting the battery cell 220 to other battery cells 220 or electrical components. The second wall 222 is distinguished from the first wall 221 since they belong to different walls of the battery cell 220 respectively.

The smoke exhaust assembly 300 is simultaneously connected to the first exhaust ports 214 of the plurality of battery boxes 210. The pressure relief mechanism 223 in each battery 200 discharges the smoke in each battery cell 220 to the first exhaust port 214, which in turn is discharged outside the box body 100 via the smoke exhaust assembly 300. The smoke exhaust assembly 300 is configured to converge the smoke separately discharged from the plurality of batteries 200 and discharge it to the outside environment.

The electrical chamber 211 is a partial space arranged inside the battery box 210 for accommodating the plurality of battery cells 220. The battery cells 220 are placed closely inside the electrical chamber 211 to fully utilize the internal space of the electrical chamber 211, which improves the energy density of the battery 200. The shape of the battery chamber 110 can be determined according to the battery cells 220 and other electrical components to be accommodated, so as to avoid a waste of the space. The battery cells 220 in the electrical chamber 211 are electrically connected to output a higher voltage, so that the electrical chamber 211 can also be called as a high-voltage chamber.

The collection chamber 212 is a partial space arranged inside the battery box 210, and is arranged adjacent to the electrical chamber 211. The first exhaust port 214 is connected to the collection chamber 212 and the pressure relief mechanism 223 is arranged towards the first isolation component 213 for discharging the smoke into the collection chamber 212, so that the smoke can be discharged to the outside via the first exhaust port 214 and the smoke exhaust assembly 300. The electrical connection in the collection chamber 212 connected to a voltage output terminal is not provided, so that the collection chamber 212 can also be a low-voltage chamber relative to the high-voltage chamber.

The first isolation component 213 is arranged in the battery box 210. **The** first isolation component 213 in the embodiment is of a platy structure that separates the internal space of the entire battery box 210 into the electrical chamber 211 located above and the collection chamber 212 located below. **The** electrical chamber 211 accommodates the plurality of battery cells 220, and the isolation component supports the plurality of battery cells 220 at the same time. The material of the first isolation component 213 is selected to ensure the fixation and protection for the battery cells 220, and the present disclosure does not limit the material of the first isolation component 213, nor does it limit whether the materials of the isolation component and the battery box 210 are the same. The first isolation component 213 is provided with a through hole, and the through hole is arranged opposite to the pressure relief mechanism 223 in the battery cell 220, so that the smoke can be discharged to the collection chamber 212 via the through hole when the pressure relief mechanism 223 is actuated. The first isolation component 213 can be integrally molded with the battery box 210, or it can be fixed inside the battery box 210 through a subsequent process, which can be arranged according to comprehensive actors, such as material, processing, and production process, etc.

In the embodiment, the electrode terminals 224 and the pressure relief mechanism 223 are separately arranged on two different walls of the battery 200, which reduces the probability that the smoke discharged by the battery cells 220 passes through the electrode terminals 224 in the other direction and other electrical components when the pressure relief mechanism 223 is actuated, so as to reduce the risk of the electrical hazards, and improve the safety of the energy storage device 1000.

In one embodiment, the first wall 221 is attached to the first isolation component 213.

The first wall 221 is attached to the first isolation component 213, which means that a surface of the first wall 221 facing the first isolation component 213 is in contact with a surface of the first isolation component 213 facing the first wall 221.

In the embodiment, the first wall 221 can be a bottom surface of the battery cell 220, which is attached to the first isolation component 213. **The** pressure relief mechanism 223 discharges the smoke in the battery cell 220 into the collection chamber 212 after it passes through the first wall 221, the first isolation component 213 in sequence.

In the embodiment, the first wall 221 is attached to the first isolation component 213, so as to reduce the space occupied by structure members such as the wall, and at the same time facilitate the pressure relief mechanism 223 to discharge the smoke.

In one embodiment, the first wall 221 is arranged opposite to the second wall 222.

In the embodiment, the first wall 221 can be the bottom surface of the battery cell, so that the second wall 222 arranged relative to the first wall 221 can be a top surface. Accordingly, the electrode terminals 224 are arranged at the top of the battery cell 220, and the electrical components, such as the busbar connecting each battery cell 220, are also arranged at the top of the electrical chamber 211.

When the battery cell 220 is in a cuboid, the first wall 221 and the second wall 222 are arranged oppositely, so that a distance between the first wall 221 and the second wall 222 can be maximum, which further reduces the probability of the smoke escaping to the electrode terminals 224 when the battery cell 220 extracts the smoke from the outside, so as to reduce the risk of the electrical hazards, and improve the safety of the energy storage device 1000.

In one embodiment, the smoke exhaust assembly 300 includes a main pipe 310 and a plurality of branch pipes 320, wherein the plurality of branch pipes 320 and the plurality of batteries 200 are in one-to-one correspondence, wherein one end of each branch pipe 320 is communicated with the first exhaust port 214 of the corresponding battery 200; the other end of each branch pipe is communicated with the main pipe 310; and one end of the main pipe 310 is communicated with outside of the box body 100.

One end of each branch pipe 320 is connected to the first exhaust port 214 on the battery box 210 of one battery 200, and the other end is connected to the main pipe 310, so as to discharge the smoke of each battery cell 220 and converge it to the main pipe 310, so that the main pipe 310 then discharges the smoke. The main pipe 310 converges the smoke conveyed from each branch pipe 320. In the embodiment, the plurality of batteries 200 are provided, which are closely arranged along both longitudinal and transverse directions, so that the branch pipes 320 can also be connected to the plurality of first exhaust ports 214 at the same time and then converge to the main pipe 310 step by step, so as to realize the purpose that the exhaust path of each battery 200 is independent.

In the embodiment, the branch pipes 320 is provided to isolate smoke discharge paths of different batteries 200, which avoids that the smoke produced by the battery 200 with thermal runaway escapes to another batteries 200 and causes adverse effects, and improves the safety of the energy storage device 1000.

In one embodiment, one end of the main pipe 310 communicated with the outside of the box body 100 is provided with a smoke exhaust fan 330 and/or a fire damper 340.

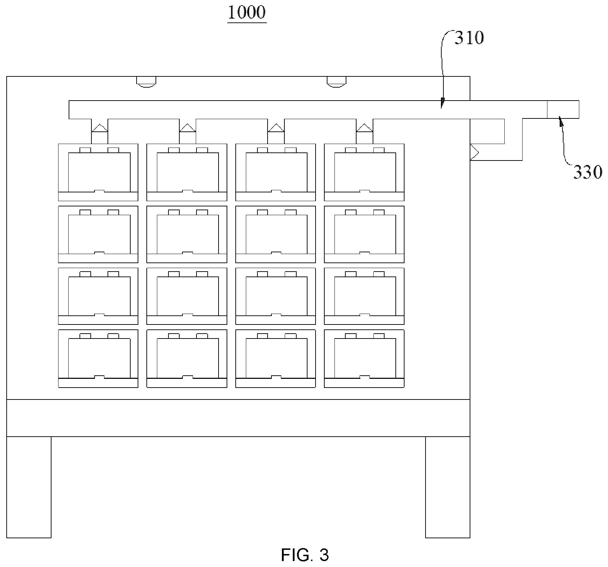

Referring to FIG. 3, FIG. 3 shows a schematic structure diagram of the energy storage device 1000 provided by another embodiment of the present disclosure. The main pipe 310 is arranged at one end outside the box body 100, and the smoke exhaust fan 330 is arranged at the end port to improve the efficiency of discharging the smoke outwardly. The smoke exhaust fan 330 is a device that converts mechanical energy into gas pressure energy and kinetic energy through rotation, which is configured to transport the gas inside the main pipe 310 to the outside. The specific structure of the smoke exhaust fan 330 includes, but is not limited to a fan, an air blower, a turbine, and other power devices, so as to realize the purpose of driving the smoke gas to pass uniaxially. The smoke exhaust fan 330 will reduce the air pressure inside the main pipe 310 and the branch pipe 320 when extracting the smoke, so that the smoke inside the smoke exhaust assembly 300 has a tendency of diffusing outwardly, so as to prevent the smoke from returning to affect normal batteries 200.

Referring to FIG. 1, FIG. 1 shows a schematic structure diagram of the energy storage device 1000 provided by one embodiment of the present disclosure. The end part of the main pipe 310 arranged outside of the box body 100 can also be provided with the fire damper 340. The fire damper 340 is a safety device installed inside the flammable gas pipe, which can prevent a spread of flame caused by combustion of flammable gas and liquid vapor by rapidly lowering the temperature of flammable materials. The fire damper in the present disclosure is provided in prior art, so it will not be repeated herein. The smoke contains flammable gas. If the battery 200 burns when undergoing thermal runaway, the flammable gas is ignited, and the gas flame will rapidly spread to the entire pipe network where the smoke is located. The fire damper 340 is provided to effectively avoid the spread of combustion, which minimizes the scope of hazard.

In the above embodiment, the smoke exhaust fan 330 is provided to improve the efficiency of discharging smoke, so that the branch pipes 320 and the main pipe 310 have a negative pressure therein, which can prevent the smoke from returning to the battery 200; and the fire damper 340 is provided to effectively reduce the probability of fire and tempering accidents. They work together to improve the safety of the energy storage device 1000.

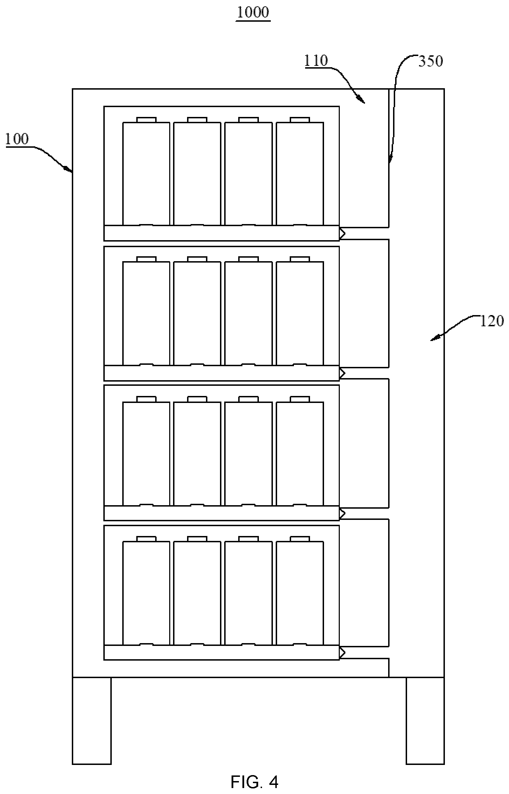

Referring to FIG. 4, FIG. 4 shows a schematic structure diagram of a side section of the energy storage device 1000 provided by another embodiment of the present disclosure. The smoke exhaust assembly 300 includes a second isolation component 350 and the plurality of branch pipes 320, wherein the second isolation component 350 is configured to separate the internal space of the box body 100 into the battery chamber 110 and the gas-collecting chamber 120; the plurality of batteries 200 are arranged in the battery chamber 110; and the plurality of branch pipes 320 and the plurality of batteries 200 are in one-to-one correspondence, wherein one end of each branch pipe 320 is communicated with the first exhaust port 214 of the battery 200 and the other end is communicated with the gas-collecting chamber 120, and a second exhaust port communicated with the gas-collecting chamber 120 is arranged on the box body 100 (not shown).

In the embodiment, the second isolation component 350 is platy, which is configured to separate the internal space of the box body 100 into the battery chamber 110 and the gas-collecting chamber 120 arranged transversely. As shown in FIG. 4, the battery chamber 110 is arranged on the left side and the gas-collecting chamber 120 is arranged on the right side. The second isolation component 350 is arranged vertically to separate the battery chamber 110 from the gas-collecting chamber 120, so as to prevent the air from passing through the battery chamber 110 and the gas-collecting chamber 120. The branch pipes 320 are arranged horizontally, wherein one end of each branch pipe 320 is connected to the first exhaust port 214 on the battery box 210 of one battery 200, and the other end is connected to a sidewall of the gas-collecting chamber 120, and is configured to discharge and converge the smoke into the gas-collecting chamber 120. The gas-collecting chamber 120 converges the smoke conveyed by the branch pipes 320, and then discharges the smoke to the outside via the second exhaust port.

The second isolation component 350 has a simpler structure compared to the main pipe 310, which separates the gas-collecting chamber 120 on one side of the box body 100, wherein the gas-collecting chamber 120 can play the same function as the main pipe 310 to collect the smoke discharged by the branch pipes 320, so as to simplify the structure and reduce the manufacturing cost, and at the same time make full use of the sidewall structure of the box body 100, which improves the space utilization rate.

In one embodiment, the second exhaust port is provided with the smoke exhaust fan 330 and/or the fire damper 340.

The smoke exhaust fan 330 can be arranged at the position of the second exhaust port to improve the efficiency of discharging the smoke outwardly. The smoke exhaust fan 330 is the device that converts mechanical energy into gas pressure energy and kinetic energy through rotation, which is configured to transport the gas inside the main pipe 310 to the outside. The specific structure of the smoke exhaust fan 330 includes, but is not limited to a fan, an air blower, a turbine, and other power devices, which is to realize the purpose of driving the smoke gas to pass uniaxially. The smoke exhaust fan 330 will reduce the air pressure inside the gas-collecting chamber 120 and the branch pipe 320 when extracting the smoke, so that the smoke inside the smoke exhaust assembly 300 has a tendency of diffusing outwardly, so as to prevent the smoke from returning to produce bad effects on the normal batteries 200.

The fire damper 340 can further be arranged at a position of the second exhaust port. The fire damper 340 is the safety device installed inside the flammable gas pipe, which can prevent the spread of flame caused by combustion of flammable gas and liquid vapor by rapidly reducing the temperature of flammable materials. The fire damper 340 is a prior art, and the present disclosure does not provide a detailed description for its structure and principle. The smoke contains flammable gas. If the battery 200 burns when undergoing thermal runaway, the flammable gas is ignited, and the gas flame will rapidly spread to the entire pipe network where the smoke is located. The fire damper 340 is provided to effectively avoid the spread of combustion, which minimizes the scope of hazard.

In the above embodiment, the smoke exhaust fan 330 is provided to improve the efficiency of discharging smoke, so that the branch pipes 320 and the gas-collecting chamber 120 have the negative pressure therein, which can prevent the smoke from returning to the battery 200; and the fire damper 340 is provided to effectively reduce the probability of fire and tempering accidents. They work together to improve the safety of the energy storage device 1000.

In one embodiment, the smoke exhaust assembly 300 further includes a plurality of check valves 360, wherein each branch pipe 320 is provided with one check valve 360 correspondingly, and the check valve 360 is configured to uniaxially discharge the smoke discharged by the first exhaust port 214 to the outside of the box body 100 via the smoke exhaust assembly 300.

The check valve 360 has the function of unidirectional exhaust. The check valve 360 is arranged in the branch pipe 320, so that the smoke only moves uniaxially towards a discharge direction during the discharge process, so as to prevent the smoke from returning and affecting the battery 200 and high-voltage components. In the embodiment, the check valve 360 is arranged at one end of the branch pipe 320 close to the main pipe 310, so that connection positions of the branch pipes 320 and the first exhaust ports 214 are located at an inlet side of the check valve 360. Therefore, all the collection chambers 212 connected to the branch pipe 320 can be extracted by the check valve 360 when it starts, which avoids that the collection chambers 212 are located at one side of the check valve 360 so as to be affected by the smoke discharged by another collection chambers 212.

In the embodiment, the check valves 360 are arranged in the branch pipes 320 to improve a rate of smoke discharge in the branch pipes 320, and at the same time the check valves 360 effectively avoid the smoke from returning, which affects other normal batteries 200, thereby improving the safety of the energy storage device 1000.

In one embodiment, each energy storage module 2000 further includes a sensor 500 and a fire extinguishing mechanism (not shown), wherein the sensor 500 and the fire extinguishing mechanism are arranged in the box body 100; the sensor 500 is configured to detect the gas state parameter in the box body 100; and the fire extinguishing mechanism is configured to extinguish the fire in the box body 100 when the sensor 500 detects the abnormal gas state parameter.

The sensor 500 and the fire extinguishing mechanism are arranged in the energy storage module 2000, which is provided for the space within the energy storage module 2000, i.e., valve hall. The sensor 500 can be selected as a temperature detector, a smoke detector, a gas detector, or other types of detectors, which is configured to monitor the gas status in the valve hall. The gas status can include parameters such as the temperature of the gas, the concentration of the smoke or a particular dangerous gas, etc. The gas detector can detect the content of dangerous gas, such as carbon monoxide, hydrogen, etc. The gas detector will send an alarm signal when the concentration of the monitored dangerous gas reaches a preset value. The sensor 500 is arranged in the top of the valve hall. When the battery 200 undergoes thermal runaway, the smoke produced is more likely to converge in the top of the valve hall due to the high temperature and the low density of the dangerous gas. Therefore, the sensor 500 is arranged in the top of the valve hall, so as to more accurately detect the change of the gas status.

The fire extinguishing mechanism is arranged in the valve hall and carries out corresponding actions according to the detection results of the sensor 500. The fire extinguishing mechanism is a mechanism which can suppress or extinguish burning, open flame, etc. The fire extinguishing mechanism in the present disclosure includes a nozzle, a fire extinguishing agent container, and a power member (e.g., a pump, etc.) connected with each other. The fire extinguishing agent container contains fire extinguishing agents to extinguish the fire. The power member is configured to send the fire extinguishing agent to the nozzle and spray out, so as to spray the fire extinguishing agent to a possible fire source. The extinguishing agent includes, but is not limited to, one or more of aerosol, perfluorohexanone, heptafluoropropane, and/or inert gas, which is used to extinguish the fire. The present disclosure does not limit the selection of the extinguishing agent and the structure of the fire extinguishing mechanism.

In the embodiment, the sensor 500 and the fire extinguishing mechanism are provided, so that it is possible to detect an abnormal state via the sensor 500 and then control the fire extinguishing mechanism in time for fire protection when the energy storage module 2000 undergoes the thermal runaway, so that the energy storage module 2000 has a function of automatic fire protection, which improves the safety of the energy storage module 2000.

In the embodiment, the smoke exhaust assembly 300 can be regarded as a first fire protection measure, and the sensor 500 and the fire extinguishing mechanism are regarded as a second fire protection measure. The smoke exhaust assembly 300 is configured to direct the smoke inside the battery cell 220 with thermal runaway to the outside of the energy storage device 1000, which serves as the first fire protection function under the thermal runaway state. When the situation of thermal runaway further expands and deteriorates, the pipes and chambers of the smoke exhaust assembly 300 or the battery box 210 may be ruptured under high temperature, high pressure, or burning, etc., and the smoke will diffuse to the other space (i.e., valve hall) inside the energy storage module 2000. The first fire protection function is no longer effective at this time. The sensor 500 detects the smoke and the fire extinguishing mechanism carries out fire protection actions according to the detection result, which serves as the second fire protection function. The design of two-stage fire protections effectively improves the safety and automatic fire protection capability of the energy storage device 1000.

In one embodiment, a plurality of sensors 500 are arranged in the box body 100 of each energy storage module 2000, and the fire extinguishing mechanism is configured to extinguish the fire within the box body 100 when at least two of the sensors 500 detect the abnormal gas state parameter.

The plurality of sensors 500 are provided to provide more accurate detection for the condition of the smoke leakage, which control the fire extinguishing mechanism to act after the first fire protection is unable to control the thermal runaway and the smoke exhaust assembly 300 is ruptured. The plurality of sensors 500 in the present disclosure can be of the same type of sensor 500 or different types of sensors 500. The fire extinguishing mechanism is actuated when the at least two of the sensors 500 detect abnormal parameters, which avoids causing harm to the batteries 200 working normally since the sensor 500 acts by mistake due to misfunction, so as to ensure that the action is performed only in a severe thermal runaway station.

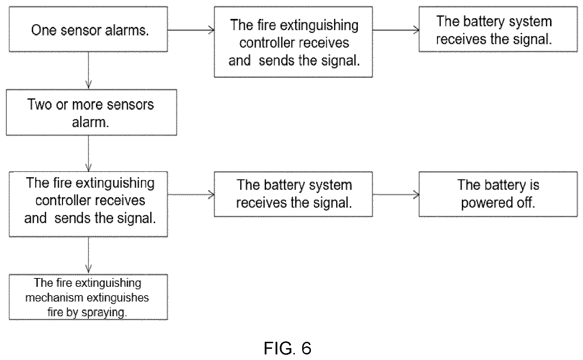

Referring to FIG. 6, FIG. 6 shows a logic control flow diagram of the energy storage device of the present disclosure. When one sensor 500 detects the abnormal state and alarms, the fire extinguishing controller receives the alarm signal and sends the signal to the battery control system, at which time both the fire extinguishing controller and the battery control system are not actuated. When two or more sensors 500 detect the abnormal state and alarm, the fire extinguishing controller receives the alarm signal and controls the fire extinguishing mechanism to extinguish the fire, and at the same time sends the signal to the battery control system. The battery control system powers off and reduces the high voltage of the battery 200 after received the signal, which avoids that the battery 200 under the high voltage state continues to work and expands the disaster scope.

In the embodiment, the plurality of sensors 500 are arranged in the energy storage module 2000, which improves the accuracy of the sensors 500 for monitoring the abnormal state, such as the thermal runaway, etc., so as to avoid triggering the fire extinguishing mechanism by mistake, and improve the stability of the energy storage module 2000.

In one embodiment, each energy storage module 2000 further includes the fire extinguishing controller (not shown), wherein the fire extinguishing controller is electrically connected to the sensor 500 and the fire extinguishing mechanism, and the sensor 500 sends the electrical signal to the fire extinguishing controller according to the detection result of the gas state parameter; and the fire extinguishing controller controls the actions of the fire extinguishing mechanism according to the electrical signal.

The number of sensors 500 is more than one. The fire extinguishing controller is configured to be able to analyze and process the signals of multiple sensors 500 synthetically, which can control the fire extinguishing mechanism according to the actual situation and preset logic. The fire extinguishing controller can be a signal processing system, which can be configured to receive the electrical signals from the sensor 500, and send the electrical signals controlling the fire extinguishing mechanism at the same time. At the same time, the fire extinguishing controller is electrically connected to the battery control system to send the signal when undergoes the thermal runaway, so that the battery control system powers off the battery 200, which avoids further expansion of the hazard scope.

In the above solution, the fire extinguishing controller is provided to control the fire extinguishing mechanism pertinently, which improves the actuating accuracy of the fire extinguishing mechanism, and improves the stability of the energy storage module 2000.

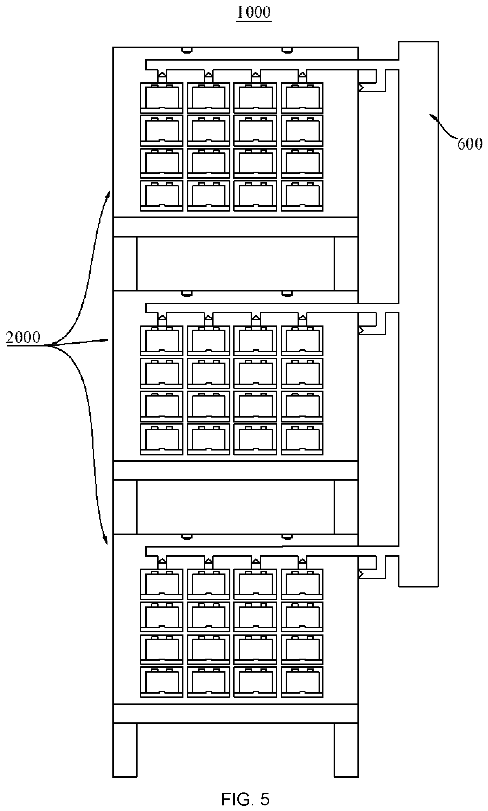

Referring to FIG. 5, FIG. 5 shows a schematic structure diagram of the energy storage device 1000 provided by another embodiment of the present disclosure. The energy storage device 1000 includes a smoke exhaust main pipe 600 and a plurality of energy storage modules 2000, wherein the plurality of energy storage modules 2000 are stacked along a direction of gravity, and the smoke exhaust assembly 300 of each energy storage module 2000 is communicated with the smoke exhaust main pipe 600; and the smoke exhaust main pipe 600 is arranged outside of the box body 100 of the plurality of energy storage modules 2000.

The energy storage device 1000 can include the plurality of energy storage modules 2000. Three stacked energy storage modules 2000 are provided in the present disclosure. The end of the smoke exhaust assembly 300 of each energy storage module 2000 is separately connected to the smoke exhaust main pipe 600, and returns the smoke via the smoke exhaust main pipe 600 and discharges it to the outside. The plurality of energy storage modules 2000 stacked can accommodate more batteries 200 in a limited space, so as to improve the output power and energy storage efficiency. Each energy storage module 2000 is provided with supporting legs 400, so that a certain distance is kept between the upper and lower adjacent energy storage modules 2000, which ensures each energy storage module 2000 works individually, thus reducing the probability of mutual influence.

In the embodiment, the plurality of energy storage modules 2000 are provided to expand the capacity of the energy storage device 1000, and at the same time the smoke discharged by the plurality of energy storage modules 2000 is discharged via the smoke exhaust main pipe 600, so as to ensure the safety and universality of the energy storage device 1000.

In one embodiment, the energy storage device 1000 further includes the fire extinguishing controller, and the plurality of energy storage modules 2000 share one fire extinguishing controller, wherein the fire extinguishing controller is electrically connected to the sensor 500 and the fire extinguishing mechanism, and the sensor 500 sends the electrical signal to the fire extinguishing controller according to the detection result of the gas state parameter; and the fire extinguishing controller controls actions of the fire extinguishing mechanism according to the electrical signal.

In the embodiment, the three energy storage modules 2000 are together connected to the same fire extinguishing controller. The sensor 500 and the fire extinguishing mechanism in each energy storage module 2000 are connected to the fire extinguishing controller respectively. The fire extinguishing controller receives the detection results of each sensor 500 and controls the fire extinguishing mechanism to carry out the fire protection action respectively according to the detection results. When receiving the alarm signals from at least two sensors 500 in a certain energy storage module 2000, the fire extinguishing controller controls the fire extinguishing mechanism in the corresponding energy storage module 2000 to carry out the fire protection action, so as to realize precise control for the fire extinguishing action, which as little as possible affects the batteries 200 without the thermal runaway.

In the embodiment, the fire extinguishing controller simultaneously controls the sensors 500 and the fire extinguishing mechanism of the plurality of energy storage modules 2000, so as to carry out the fire protection only for corresponding energy storage modules 2000 with serious abnormal states according to specific situations of the abnormal state, such as thermal runaway, thus avoiding unnecessary waste and loss due to the fire protection for normal (without the abnormal states) energy storage modules 2000 and improving the fire protection efficiency of the automatic fire protection actions.

Referring to FIG. 1 and FIG. 2, FIG. 1 shows a structure schematic diagram of the energy storage device 1000 provided by one embodiment of the present disclosure; and FIG. 2 shows a structure schematic diagram of the side view of the energy storage device 1000 shown in FIG. 1. The energy storage device 1000 includes at least one energy storage device 2000, wherein each energy storage module 2000 includes the box body 100, the plurality of batteries 200, and the smoke exhaust assembly 300. The plurality of batteries 200 are arranged in 4*4 in the box body 100, wherein each battery 200 includes the battery box 210 and the plurality of battery cells 220, wherein the battery cells 220 include the pressure relief mechanism 223 and electrode terminals 224; the pressure relief mechanism 223 is arranged on the first wall 221 of the battery cells 220; and the electrode terminals 224 are arranged on the second wall 222 of the battery cells 220, wherein the second wall 222 is different from the first wall 221, and the first exhaust port 214 is arranged on the battery box 210. The smoke exhaust assembly 300 is communicated with the first exhaust port 214 of each battery 200, and configured to discharge smoke discharged by the plurality of batteries 200 to the outside of the box body 100. The battery box 210 includes the electrical chamber 211, the collection chamber 212, and the first isolation component 213, wherein the plurality of battery cells 220 are accommodated in the electrical chamber 211, and the first isolation component 213 is configured to isolate the electrical chamber 211 from the collection chamber 212; and the first isolation component 213 is provided with the through hole, wherein the through hole is arranged opposite to the pressure relief mechanism 223.

The smoke exhaust assembly 300 includes the main pipe 310 and the plurality of branch pipes 320, wherein the branch pipes 320 are separately connected to four batteries 200 arranged in a vertical column. One end of each branch pipe 320 is communicated with the first exhaust port 214 of the corresponding battery 200, and the other end of each branch pipe is communicated with the main pipe 310. The four branch pipes 320 are connected to all the batteries 200 and then converge to the main pipe 310. One end of the main pipe 310 is arranged in the box body 100 to be connected to the branch pipes 320, and the other end is communicated with the outside of the box body 100.

Although the present disclosure is described with reference to preferred embodiments, various improvements can be made thereto and components thereof can be replaced with equivalents without departing from the scope of the present disclosure. Particularly, each technical feature referred to in the various embodiments can be combined in any method as long as without structure conflicts. The present disclosure is not limited to particular embodiments disclosed in the text, but includes all technical solutions falling within the scope of the claims.

## Claims

1. An energy storage device, comprising at least one energy storage module, wherein each energy storage module comprises:
a box body;
a plurality of batteries, arranged in the box body, wherein each of the batteries comprises a battery box and a plurality of battery cells, wherein the battery cells comprise a pressure relief mechanism and electrode terminals; the pressure relief mechanism is arranged on a first wall of the battery cells; the electrode terminals are arranged on a second wall of the battery cells; the second wall is different from the first wall; and the battery box is provided with a first exhaust port; and
a smoke exhaust assembly, communicated with the first exhaust port of each of the batteries, and configured to discharge smoke discharged by the plurality of batteries to outside of the box body, wherein
the battery box comprises an electrical chamber, a collection chamber, and a first isolation component, wherein the plurality of battery cells are accommodated in the electrical chamber, and the first isolation component is configured to isolate the electrical chamber from the collection chamber; and the first isolation component is provided with a through hole, wherein the through hole is arranged opposite to the pressure relief mechanism, the smoke discharged by the battery cells can pass through the through hole and enter the collection chamber when the pressure relief mechanism is actuated, and the first exhaust port is communicated with the collection chamber.

2. The energy storage device according to claim 1, wherein the first wall is attached to the first isolation component.

3. The energy storage device according to claim 1 or 2, wherein the first wall is arranged opposite to the second wall.

4. The energy storage device according to any one of claims 1 to 3, wherein the smoke exhaust assembly comprises a main pipe and a plurality of branch pipes, wherein the plurality of branch pipes and the plurality of batteries are in one-to-one correspondence; one end of each of the branch pipes is communicated with the first exhaust port of a corresponding battery; the other end of each of the branch pipes is communicated with the main pipe; and one end of the main pipe is communicated with outside of the box body.

5. The energy storage device according to claim 4, wherein the one end of the main pipe communicated with the outside of the box body is provided with a smoke exhaust fan and/or a fire damper.

6. The energy storage device according to any one of claims 1 to 3, wherein the smoke exhaust assembly comprises a second isolation component and a plurality of branch pipes, wherein the second isolation component is configured to separate an internal space of the box body into a battery chamber and a gas-collecting chamber; the plurality of batteries are arranged in the battery chamber; and the plurality of branch pipes and the plurality of batteries are in one-to-one correspondence, wherein one end of each of the branch pipes is communicated with the first exhaust port of a corresponding battery and the other end is communicated with the gas-collecting chamber, and a second exhaust port communicated with the gas-collecting chamber is arranged on the box body.

7. The energy storage device according to claim 6, wherein the second exhaust port is provided with a smoke exhaust fan and/or a fire damper.

8. The energy storage device according to any one of claims 4 to 7, wherein the smoke exhaust assembly further comprises a plurality of check valves, wherein each of the branch pipes is provided with one of the check valves correspondingly, and the check valves are configured to uniaxially discharge smoke discharged by the first exhaust port to the outside of the box body via the smoke exhaust assembly.

9. The energy storage device according to any one of claims 1 to 8, wherein each energy storage module further comprises a sensor and a fire extinguishing mechanism, wherein the sensor and the fire extinguishing mechanism are arranged in the box body; the sensor is configured to detect a gas state parameter in the box body; and the fire extinguishing mechanism is configured to extinguish fire within the box body when the sensor detects an abnormal gas state parameter.

10. The energy storage device according to claim 9, wherein a plurality of sensors are arranged in the box body of each energy storage module, and the fire extinguishing mechanism is configured to extinguish fire within the box body when at least two of the sensors detect the abnormal gas state parameter.

11. The energy storage device according to claim 9 or 10, wherein each energy storage module further comprises a fire extinguishing controller, wherein the fire extinguishing controller is electrically connected to the sensor and the fire extinguishing mechanism, and the sensor sends an electrical signal to the fire extinguishing controller according to a detection result of the gas state parameter; and the fire extinguishing controller controls actions of the fire extinguishing mechanism according to the electrical signal.

12. The energy storage device according to claim 9 or 10, wherein the energy storage device comprises a smoke exhaust main pipe and a plurality of energy storage modules, wherein the plurality of energy storage modules are stacked along a direction of gravity, and the smoke exhaust assembly of each of the energy storage modules is communicated with the smoke exhaust main pipe, wherein the smoke exhaust main pipe is arranged outside the box body of the plurality of energy storage modules.

13. The energy storage device according to claim 12, wherein the energy storage device further comprises a fire extinguishing controller, and the plurality of energy storage modules share one fire extinguishing controller, wherein the fire extinguishing controller is electrically connected to the sensor and the fire extinguishing mechanism, and the sensor sends an electrical signal to the fire extinguishing controller according to a detection result of the gas state parameter; and the fire extinguishing controller controls actions of the fire extinguishing mechanism according to the electrical signal.
